# EUROPÄISCHE PATENTSCHRIFT

(11) **EP 0 866 957 B1**
(45) Veröffentlichungstag und Bekanntmachung des Hinweises auf die Patenterteilung: **09.01.2002**
(21) Anmeldenummer: 96945848.8
(22) Anmeldetag: 31.10.1996
(51) Int. Cl.: G01L 1/10, G01P 15/10

(54) **INSTABILITÄTENSCHWINGER MIT ELEKTROSTATISCHER VOREINSTELLUNG**
INSTABILITY OSCILLATOR WITH ELECTROSTATIC PRESETTING
OSCILLATEUR A INSTABILITE AVEC PREREGLAGE ELECTROSTATIQUE

(30) Priorität: 16.12.1995 DE 19547184
(43) Veröffentlichungstag der Anmeldung: 30.09.1998
(73) Patentinhaber: ROBERT BOSCH GMBH, 70442 Stuttgart (DE)
(72) Erfinder: FUNK, Karsten, D-70195 Stuttgart (DE); KULCKE, Hans-Martin, D-71032 Böblingen (DE); LÄRMER, Franz, D-70437 Stuttgart (DE); UHLER, Werner, D-76646 Bruchsal (DE); SCHILP, Andrea, D-73525 Schwäbisch Gmünd (DE)
(86) Internationale Anmeldenummer: DE9602070
(87) Internationale Veröffentlichungsnummer: WO9722864

(56) Entgegenhaltungen:
- DE-A- 2 749 937
- DE-A- 4 426 163

## Beschreibung

Die Erfindung betrifft einen Kraftsensor mit den im Oberbegriff des Anspruchs 1 genannten Merkmalen.

### Stand der Technik

Kraftsensoren der gattungsgemäßen Art sind bekannt. Diese sind als frequenzanaloge resonante mechanische Sensoren ausgebildet, bei denen eine in Resonanz schwingende Struktur vorgesehen ist, deren Schwingfrequenz infolge einer zu detektierenden Krafteinwirkung, beispielsweise einer Beschleunigung oder eines Druckes, veränderlich ist. Auf Grund der äußeren Krafteinwirkung wird die in Resonanz schwingende Struktur ausgelenkt, so daß diese ihre Schwingfrequenz ändert. Die in Resonanz schwingende Struktur wird hierbei von einem Feder-Masse-System gebildet, wobei eine Erhöhung der Empfindlichkeit der Kraftsensoren durch eine Vergrößerung der seismischen Masse, eine Verringerung der Steifigkeit der Federn oder einer Kombination aus beiden Maßnahmen erreicht werden kann.

Es ist jedoch nachteilig, daß sich hierdurch die Grundfrequenz, mit der die Struktur in Resonanz schwingt, verringert, so daß eine Verschlechterung der Sensordynamik eintritt. Andererseits ist mit einer Vergrößerung der seismischen Masse eine Vergrößerung der Sensordimensionierung verbunden.

Aus der älteren Patentanmeldung DE-A- 44 26 163 (Veröffentlicht 25,1,96) ist ein Beschleunigungssensor bekannt, bei dem die in Resonanz schwingende Struktur mechanisch vorgespannt ist, so daß der Kraftsensor in der Nähe seiner mechanischen Instabilität betrieben wird. Hierdurch wird die Sensorempfindlichkeit des Kraftsensors erhöht, indem ein Arbeitspunkt des Sensors näher an die mechanische Instabilität gelegt wird. Der Abstand des Arbeitspunktes von der mechanischen Instabilität wird hierbei durch eine Größe der angelegten mechanischen Vorspannung bestimmt. Hierbei ist jedoch nachteilig, daß eine exakte Einstellung des Abstandes des Arbeitspunktes von der mechanischen Instabilität, beispielsweise durch Geometrietoleranzen im Layout des Sensors, durch aus der mechanischen Vorspannung entstehenden, schwer kontrollierbaren Schichtspannungen und Temperaturabhängigkeiten entstehen können. Gerade wenn der Kraftsensor in der Nähe seiner mechanischen Instabilität betrieben werden soll, um die Sensorempfindlichkeit zu erhöhen, führen bereits geringste Verschiebungen des Arbeitspunktes zu großen Signalvariationen und damit Signalfehlern.

### Vorteile der Erfindung

Der erfindungsgemäße Kraftsensor mit den im Anspruch 1 genannten Merkmalen bietet demgegenüber den Vorteil, daß eine exakte Einstellung eines bestimmten, wählbaren Arbeitspunktabstandes von dem Punkt der mechanischen Instabilität möglich ist. Dadurch, daß ein Abstand eines Arbeitspunktes des Kraftsensors zu einem Punkt seiner mechanischen Instabilität einstellbar ist, ist es vorteilhaft möglich, neben der exakten Einstellung des Abstandes während der Herstellung beziehungsweise des Betriebes des Kraftsensors auftretende Abweichungen, beispielsweise durch Schichtspannungen, Temperaturabhängigkeiten, Herstellungstoleranzen auszugleichen, so daß eine sehr exakte über die Betriebsdauer des Kraftsensors gleichmäßige Einstellung beziehungsweise Nachstellung des Arbeitspunktes, insbesondere eines möglichst geringen Abstandes zur mechanischen Instabilität des Kraftsensors möglich wird.

Weiterhin ist es vorteilhaft, daß durch die Einstellbarkeit des Abstandes des Arbeitspunktes von dem Punkt der mechanischen Instabilität mit ein und demselben Kraftsensor unterschiedliche Meßbereiche eingestellt werden können. Durch eine Verstellung des Arbeitspunktes kann der Abstand des Arbeitspunktes von dem durch die Geometrie des Kraftsensors vorgegebenen Punkt seiner mechanischen Instabilität variiert werden. Entsprechend dem Abstand des Arbeitspunktes von dem Punkt der mechanischen Instabilität ergeben sich unterschiedliche Sensorempfindlichkeiten, die eine entsprechende geänderte Reaktion auf eine von außen einwirkende, zu detektierende Krafteinwirkung aufweisen. Darüber hinaus kann sehr vorteilhaft der Arbeitspunkt des Kraftsensors während seines bestimmungsgemäßen Gebrauches innerhalb gewisser Grenzen variiert werden. Hierdurch kann sehr vorteilhaft eine Umschaltung des Kraftsensors, beispielsweise von einem Meßbereich auf einen anderen Meßbereich erfolgen, so daß eine unterschiedliche, wählbare Signalerfassung beziehungsweise -verarbeitung möglich wird.

In vorteilhafter Ausgestaltung der Erfindung ist vorgesehen, daß die in Resonanz schwingende Struktur mechanisch vorgespannt und mit einer zusätzlichen externen Kraft beaufschlagt wird, wobei die zusätzliche externe Kraft vorzugsweise eine elektrostatische Kraft ist. Hierdurch läßt sich in einfacher Weise mittels einer beabstandet zu der in Resonanz schwingenden Struktur angeordneten Elektrode durch Anlegen einer Spannung die schwingende Struktur zu ihrer mechanischen Vorspannung zusätzlich elektrostatisch vorspannen, so daß die Eigenfrequenz ohne Veränderung der geometrischen Struktur des Kraftsensors gesenkt werden kann und hierdurch die Sensorempfindlichkeit erhöht wird.

Weitere vorteilhafte Ausgestaltungen der Erfindung ergeben sich aus den übrigen in den Unteransprüchen genannten Merkmalen.

### Zeichnungen

Die Erfindung wird nachfolgend in Ausführungs-beispielen an Hand der zugehörigen Zeichnungen näher erläutert.Es zeigen:
- Figur 1: eine schematische Draufsicht auf einen Drucksensor (Membran + Spannungsaufnehmer) ;
- Figur 2: eine schematische Schnittdarstellung durch den Drucksensor im ausgelenkten (a) und unausgelenkten Zustand (b);
- Figur 3a-3c: schematische Darstellungen des Eigenfrequenz-Kraftzusammenhangs an einem in y-Richtung schwingenden Resonator;
- Figur 4: Zusammenhang des mechanischen, elektrostatischen und elektromechanischen Verhaltens und
- Figur 5: Arbeitspunktverschiebung eines elektromechanischen Resonators bei Erhöhung der Steuerspannung U.

### Beschreibung der Ausführungsbeispiele

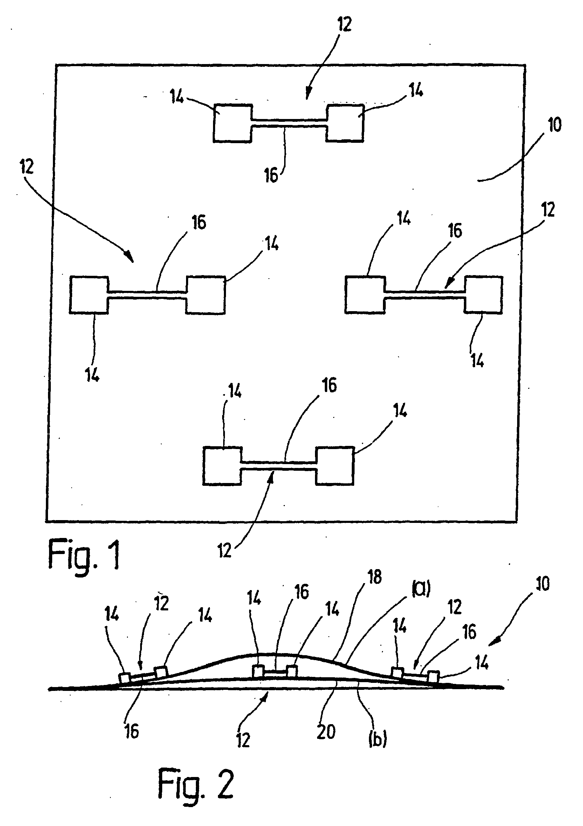

In den Figuren 1 und 2 ist ein allgemein mit 10 bezeichneter Drucksensor schematisch dargestellt, wie er beispielsweise aus der DE 43 33 099 Al bekannt ist. Der Drucksensor 10 besitzt insgesamt vier Strukturen 12, die jeweils einen zwischen zwei Lagern 14 eingespannten Biegebalken 16 aufweisen. Die Strukturen 12 sind hierbei auf einer Membran 18 (ausgelenkt dargestellt) beziehungsweise 20 (unausgelenkt dargestellt) angeordnet, die unter dem Einfluß einer äußeren, zu detektierenden Druckeinwirkung durchgebogen werden. Die äußere Krafteinwirkung kann außer durch Druck beispielsweise auch durch eine Beschleunigung oder eine andere zu messende physikalische Größe zustande kommen.

Die Biegebalken 16 werden durch hier nicht näher dargestellte Einrichtungen in resonante Schwingungen versetzt. Die Biegebalken 16 schwingen also im Ausgangszustand mit einer bestimmten Eigenfrequenz f₀. Durch die äußere Krafteinwirkung erfährt die Membran eine bestimmte, der äußeren Krafteinwirkung proportionale Durchbiegung, wobei die Biegebalken 16 der Strukturen 12 je nach ihrer Anordnung auf der Membran auf Druck beziehungsweise Zug beanprucht werden. Die in Figur 2 dargestellten äußeren Biegebalken 16 werden auf Druck, während die inneren Biegebalken 16 auf Zug beansprucht werden. Durch diese Beanspruchung verändern die Biegebalken 16 ihre Schwingungsfrequenz, die über geeignete, hier nicht näher zu betrachtende Aufnehmer in bekannter Weise detektiert werden können. Durch die Veränderung der Schwingfrequenz kann auf die Größe der einwirkenden Kraft/Druck geschlossen werden, so daß mittels des Drucksensors 10 insgesamt ein der äußeren Kraft/Druckeinwirkung proportionales Signal bereitgestellt werden kann.

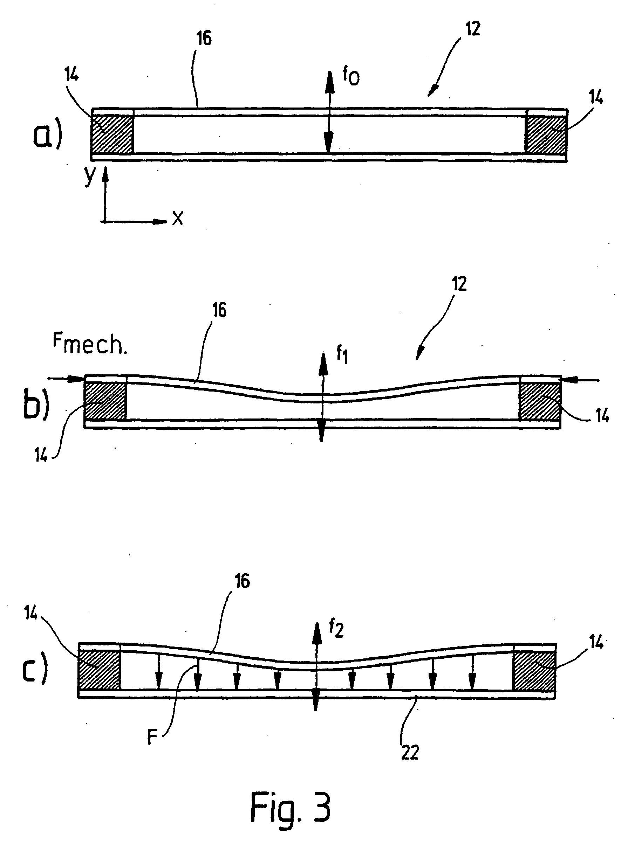

In den Figuren 3a - 3c ist jeweils eine Struktur 12 des Drucksensors 10 schematisch dargestellt. Gleiche Teile sind mit gleichen Bezugszeichen wie in Figur 1 bezeichnet und nicht nochmals erläutert.

Figur 3a zeigt den mit einer Frequenz f₀ schwingenden Biegebalken 16. Figur 3b zeigt einen mechanisch vorgespannten Biegebalken 16 - wie dies in der älteren Patentanmeldung DE 44 26 163 beschrieben ist -, wobei der Biegebalken 16 hier mit einer Frequenz f₁ schwingt. Die Frequenz f₁ ist hierbei kleiner als die Eigenfrequenz f₀, so daß die Struktur 12 mit ihrem noch zu erläuternden Arbeitspunkt näher an dem Punkt der mechanischen Instabilität arbeitet.

Gemäß der Darstellung in Figur 3c ist unterhalb des Biegebalkens 16 eine Elektrode 22 angeordnet, wobei diese mit einem bestimmten Spannungspotential U beaufschlagt wird. Infolge des Spannungspotential U treten bekanntermaßen elektrostatische Kräfte F auf, die zu einer elektrostatischen Vorspannung des Biegebalkens 16 führen. Dieser schwingt nunmehr mit einer Schwingungsfrequenz f₂, die ebenfalls kleiner ist als die Eigenfrequenz f₀. Das Anregen der Biegebalken 16 zum Schwingen erfolgt durch hier nicht näher dargestellte Mittel, beispielsweise einem elektrostatischen Kammantrieb. Durch diese Mittel werden die Biegebalken in Resonanzschwingungen mit einer Frequenz f versetzt. Entsprechend den Varianten in den Figuren 3a bis 3c wird die Resonanzfrequenz f die Eigenfrequenz f₀ oder die durch die mechanische oder elektrostatische Vorspannung sich einstellende Frequenz f₁ oder f₂ annehmen.

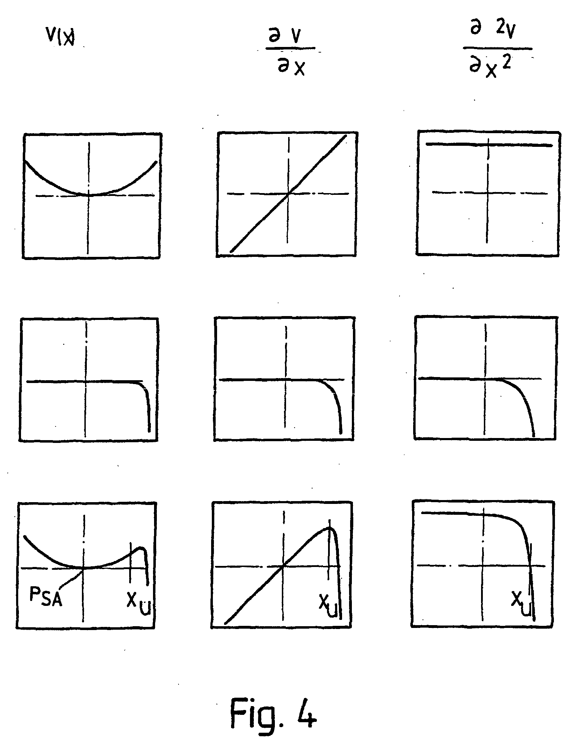

An Hand der Figur 4 werden verschiedene Kennlinien, die sich für eine Steifigkeit-Federkonstante der mechanischen Federsteifigkeit und der elektrostatischen Vorspannung ergeben, gezeigt. In der oberen Zeile der Kennlinien ist der Potentialverlauf der mechanischen Feder, in der mittleren Zeile der Verlauf des elektrostatischen Potentials und in der unteren Zeile die Potentialkurve für eine Überlagerung der mechanischen Feder und des elektrostatischen Potentials dargestellt. Die linke Spalte verdeutlicht jeweils den Verlauf der potentiellen Energie V (x), die mittlere Spalte zeigt die Kennlinien der ersten Ableitung des Gesamtpotentials V (x), also die wirksame Kraft F= - grad V und die rechte Spalte zeigt die zweite Ableitung des Potentials V (x), nämlich die effektive Federkonstante des Biegebalkens 16 der Struktur 12.

Für die weitere Erläuterung wird sich auf die unterste Zeile der Kennlinie, nämlich für den Fall der Überlagerung der mechanischen und der elektrostatischen Vorspannung bezogen. In der linken Kennlinie der unteren Zeile ist der Verlauf des Gesamtpotentials V (x) gezeigt, das sich aus dem Federpotential der linearen Kraft-Weg-Abhängigkeit des Biegebalkens 16 und einem überlagerten 1\(x-x₀) Potential der elektrostatischen Kraft zusammensetzt. Mit x₀ ist hierbei der Abstand der Elektrode 22 zu dem Biegebalken 16 in Ruhelage des Biegebalkens 16 bezeichnet.

In die Gesamtpotentialkurve V (x) ist der Sensorarbeitspunkt P_{SA} der Struktur 12 als Minimum der Gesamtpotentialkurve gekennzeichnet (der Arbeitspunkt eines harmonischen Oszillators ist immer das Potentialminimum).

In den Kennlinien für die wirksame Gesamtkraft F und die effektive Federkonstante ist der Wert xᵤ eingetragen, der den Umkehrpunkt der Gesamtpotentialfunktion darstellt, an dem die erste Ableitung, also die wirksame Gesamtkraft F, ein Maximum und die zweite Ableitung, also die effektive Federkonstante, ihren Nullpunkt haben. Hieraus ergibt sich, daß für die Amplitude xₘₐₓ der Schwingung des Biegebalkens 16 um den Arbeitspunkt gelten muß, daß xₘₐₓ sehr viel kleiner als der Wert xᵤ sein muß. Der Umkehrpunkt der Potentialfunktion wird hierbei wesentlich durch die Geometrie der Struktur 12, insbesondere des Biegebalkens 16 und der Elektrode 22, von der die elektrostatische Anziehungskraft ausgeht, und der Steuerspannung U bestimmt. An Hand der rechten Darstellung wird deutlich, daß die sich aus der zweiten Ableitung der Gesamtpotentialfunktion ergebende effektive Federkonstante mit zunehmenden x-Werten immer kleiner wird, bis sie den Wert null bei x=xᵤ erreicht. Die sich aus der ersten Ableitung der Gesamtpotentialfunktion ergebende wirksame Gesamtkraft erreicht hier ihr Maximum und sinkt mit größer werdenden x-Werten ab.

Nach Überschreiten des Wertes xᵤ wird die von der elektrostatischen Anziehung ausgehende Kraft größer als die rücktreibende Kraft des Biegebalkens 16. Die Summe der Kräfte am Biegebalken 16 wird somit bei xᵤ Null, das heißt, dieser hat seinen Punkt der mechanischen Instabilität erreicht.

Durch ein Verschieben des Sensorarbeitspunktes P_{SA} in Richtung des Punktes der mechanischen Instabilität, das heißt, eine Veränderung des Abstandes, hier eine Verkleinerung des Abstandes, führt zu einer höheren Sensorempfindlichkeit, da eine Änderung der Schwingungsfrequenz des Biegebalkens 16 - durch das Angreifen einer äußeren zu detektierenden Kraft - zu einer relativ großen Signalveränderung führt.

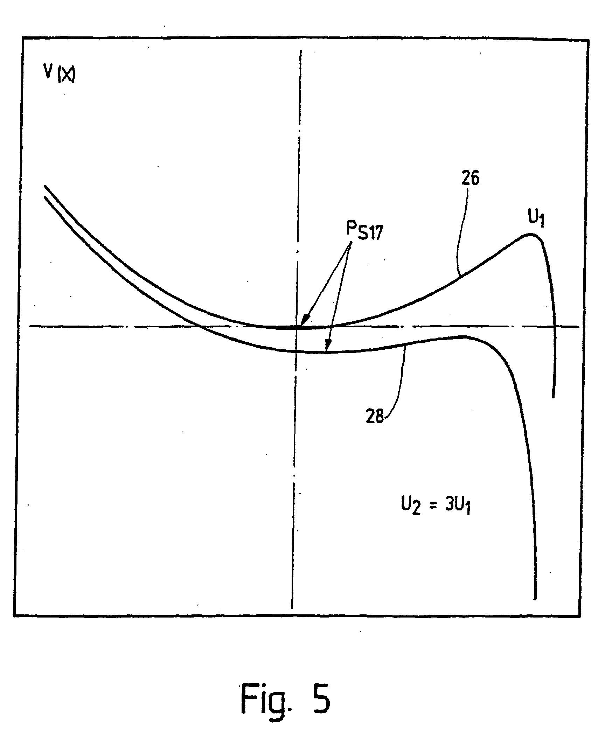

An Hand der in Figur 5 dargestellten Kennlinien wird die Möglichkeit der Verschiebung des Sensorarbeitspunktes P_{SA} in Richtung des Punktes der mechanischen Instabilität verdeutlicht. An Hand der hier dargestellten Kurven des Gesamtpotentialverlaufes V (x) von der an der Elektrode 22 angelegten Spannung U wird deutlich, daß mit steigender Spannung der sich im Minimum des Potentialverlaufes V (x) befindliche Sensorarbeitspunkt P_{SA} sich zu größeren x-Werten hin verschiebt. Mit größeren x-Werten wird - wie bereits erläutert - die sich aus dem mechanischen und elektrostatischen Vorspannung zusammensetzende effektive Federkonstante und damit die Resonanzfrequenz f der Struktur 12 zunehmend kleiner, die Nachweisempfindlichkeit des Sensors also größer.

In Figur 5 ist eine erste Kennlinie 26 für eine Spannung U₁ und eine zweite Kennlinie 28 für eine Spannung U₂ dargestellt, die dem dreifachen Wert der Spannung U₁ entspricht. Es wird deutlich, daß mit steigender Spannung U der Sensorarbeitspunkt P_{SA} verschoben wird. Da mit steigender Spannung U die elektrostatische Kraft F und damit die elektrostatische Vorspannung des Biegebalkens 16 ansteigen, ist über die Einstellung der Spannung U die Einstellung des Sensorarbeitspunktes P_{SA} beziehungsweise insbesondere die Einstellung eines Abstandes des Sensorarbeitspunktes P_{SA} zu dem Punkt der mechanischen Instabilität der Struktur 12 möglich. Bei Erreichen einer bestimmten Spannung, die sich aus der Formel U² = 8 x K x x₀³/(27 ε₀ A) ergibt, existiert kein Minimum des Gesamtpotentialverlaufes mehr, so daß das System augenblicklich instabil wird. Mit K ist hierbei die Federkonstante des mechanischen Feder-Masse-Systems der Struktur 12 und mit A die wirksame Fläche des aus der Elektrode 22 und dem Biegebalken 16 gebildeten Kondensators bezeichnet.

## Patentansprüche

1. Kraft-/Drucksensor (10) mit einer in Resonanz schwingenden Struktur (12), deren Schwingfrequenz infolge einer zu detektierenden Krafteinwirkung veränderlich ist, **dadurch gekennzeichnet, daß** durch Anlegen einer elektrischen Spannung (U) ein Abstand eines Arbeitspunktes (P_{SA}) zu einem Punkt seiner mechanischen Instabilität einstellbar ist.

2. Kraft-/Drucksensor nach Anspruch 1, **dadurch gekennzeichnet, daß** die in Resonanz schwingende Struktur (12) vorgespannt und mit einer zusätzlichen externen Kraft beaufschlagt wird.

3. Kraft-/Drucksensor nach einem der vorhergehenden Ansprüche, **dadurch gekennzeichnet, daß** eine mechanische Vorspannung durch eine elektrostatische Kraft (F) zustande kommt.

4. Kraft-/Drucksensor nach einem der vorhergehenden Ansprüche, **dadurch gekennzeichnet, daß** die elektrostatische Kraft (F) über eine Potentialdifferenz zwischen einem Schwinger der Struktur (12) und einer im Abstand zu dem Schwinger angeordneten Elektrode (22) aufgebracht wird.

5. Kraft-/Drucksensor nach Anspruch 4, **dadurch gekennzeichnet, daß** der Schwinger der Struktur (12) ein zwischen zwei Lagern (14) eingespannter Biegebalken (16) ist.

6. Kraft-/Drucksensor nach einem der vorhergehenden Ansprüche, **dadurch gekennzeichnet, daß** der Abstand des Arbeitspunktes (P_{SA}) zu dem Punkt der mechanischen Instabilität über die Größe einer an die Elektrode (22) angelegten Spannung (U) einstellbar ist.

## Claims

1. Force/pressure sensor (10) having a structure (12), which oscillates in resonance and whose oscillation frequency is variable as a consequence of a force effect to be detected, **characterized in that** it is possible by applying an electric voltage (U) to set a distance of an operating point (P_{SA}) from a point of its mechanical instability.

2. Force/pressure sensor according to Claim 1, **characterized in that** the structure (12) oscillating in resonance is prestressed, and an additional external force is applied to it.

3. Force/pressure sensor according to one of the preceding claims, **characterized in that** a mechanical prestressing is caused by an electrostatic force (F).

4. Force/pressure sensor according to one of the preceding claims, **characterized in that** the electrostatic force (F) is brought about via a potential difference between an oscillator of the structure (12) and an electrode (22) arranged at a distance from the oscillator.

5. Force/pressure sensor according to Claim 4, **characterized in that** the oscillator of the structure (12) is a bender bar (16) clamped between two bearings (14).

6. Force/pressure sensor according to one of the preceding claims, **characterized in that** the distance of the operating point (P_{SA}) from the point of mechanical instability can be set via the magnitude of a voltage (U) applied to the electrode (22).

## Revendications

1. Capteur de force/pression (10) comportant une structure (12) oscillante en résonnance et dont la fréquence d'oscillation est variable sous l'effet d'une force à détecter,
**caractérisé en ce qu'**
en appliquant une tension électrique (U) on règle la distance entre le point de fonctionnement (P_{SA}) et le point d'instabilité mécanique du capteur.

2. Capteur de force/pression selon la revendication 1,
**caractérisé en ce que**
la structure (12) qui oscille en résonnance est précontrainte et reçoit une force externe supplémentaire.

3. Capteur de force/pression selon l'une quelconque des revendications précédentes,
**caractérisé par**
une précontrainte mécanique qui engendre une force électrostatique (F).

4. Capteur de force/pression selon l'une quelconque des revendications précédentes,
**caractérisé en ce que**
la force électrostatique (F) est appliquée par une différence de potentiel entre un oscillateur de la structure (12) et une électrode (22) située à distance de l'oscillateur.

5. Capteur de force/pression selon la revendication 4,
**caractérisé en ce que**
l'oscillateur de la structure (12) est une poutre de flexion (16) encastrée entre deux appuis (14).

6. Capteur de force/pression selon l'une quelconque des revendications précédentes,
**caractérisé en ce que**
la distance entre le point de fonctionnement (P_{SA}) et le point d'instabilité mécanique se règle par l'amplitude d'une tension (U) appliquée à l'électrode (22).
